# EUROPÄISCHE PATENTSCHRIFT

(11) **EP 2 926 324 B1**
(45) Veröffentlichungstag und Bekanntmachung des Hinweises auf die Patenterteilung: **20.02.2019**
(21) Anmeldenummer: 13798254.2
(22) Anmeldetag: 28.11.2013
(51) Int. Cl.: G07F 17/32, G07F 17/34, G09F 13/04

(54) **LEUCHTRAHMENSYSTEM**
ILLUMINATED FRAME SYSTEM
SYSTÈME DE CADRE LUMINEUX

(30) Priorität: 29.11.2012 DE 202012011537 U
(43) Veröffentlichungstag der Anmeldung: 07.10.2015
(73) Patentinhaber: Novomatic AG, 2352 Gumpoldskirchen (AT)
(72) Erfinder: GAWEL, Marek, A-2352 Gumpoldskirchen (AT); WÖLS, Martin, A-2352 Gumpoldskirchen (AT); MESUT, Ates, A-2352 Gumpoldskirchen (AT)
(74) Vertreter: Thoma, Michael
(86) Internationale Anmeldenummer: PCT/EP2013/003597
(87) Internationale Veröffentlichungsnummer: WO 2014/082748

(56) Entgegenhaltungen:
- EP-A1- 1 865 477
- WO-A1-84/04366
- WO-A1-2011/057762
- DE-U1-202009 010 906
- GB-A- 2 309 812
- JP-A- 2004 024 804
- US-A- 4 729 183
- US-A1- 2005 129 460
- US-A1- 2006 094 511
- US-A1- 2006 162 588
- US-A1- 2010 027 255
- US-A1- 2010 120 540
- US-B1- 7 661 216
- US-B2- 7 396 282

## Beschreibung

Die vorliegende Erfindung betrifft ein Leuchtrahmensystem zur Einfassung einer Anzeigeeinheit wie Bildschirm und dergleichen, mit einem Rahmen, an dem Leuchtmittel vorzugsweise in Form von LEDs angeordnet sind. Ein solches Leuchtrahmensystem kann vorteilhafterweise bei Spielgeräten Verwendung finden, die zumindest einen Bildschirm aufweisen.

An Spielgeräten in Form von beispielsweise Geldspiel- und/oder Unterhaltungsautomaten oder Wettterminals ist es bekannt geworden, um die Bildschirme solcher Geräte herum Leuchtrahmensysteme zu verwenden, mittels derer Umrisskonturen des Spielgeräts hervorgehoben, aber auch bestimmte Gehäuseabschnitte beleuchtet werden können, um die beleuchteten Gehäuseabschnitte oder daran angeordnete Bedienelemente besser sichtbar zu machen, aber auch um das gesamte Spielgeräte hervorzuheben und - beispielsweise in einer Spielstätte mit vielen weiteren Spielgeräten - hervorzuheben und anziehender zu machen.

Hierbei soll einerseits eine hohe Beleuchtungsstärke erzielt werden, um die Ausleuchtung und Hervorhebung zu verstärken. Andererseits ist sicherzustellen, einen vor dem Spielgerät stehenden Spieler bzw. Gerätebediener nicht zu blenden und durch übermäßige Beaufschlagung mit Lichteffekten zu ermüden oder gar die Sichtbarkeit der auf dem Bildschirm des Spielgeräts dargestellten Informationen zu beeinträchtigen.

Aus der Schrift EP 18 65 477 A1 ist ein Geldspielgerät mit mehreren Bildschirmen bekannt, bei dem die beiden Hauptbildschirme seitlich durch Rahmenleisten eingefasst sind, an denen mehrere LEDs angebracht und Reflektorflächen vorgesehen sind, um diverse Lichteffekte zu erzeugen, ohne dabei die Augen des Spielers zu ermüden.

Aus der US 7,396,282 ist weiterhin ein Spielgerät bekannt, dessen Bildschirme gegenüber dem Gerätegehäuse erhöht bzw. erhaben angeordnet sind, so dass zwischen der kragenförmig vorstehenden Einfassung der Bildschirme und der darunter befindlichen Gehäusefront ein sickenförmiger Vertiefungsspalt ausgebildet ist, in dem ein LED-Band angeordnet ist, um angrenzende Gehäuseabschnitte zu beleuchten. Das LED-Band strahlt unter dem kragenförmigen, überstehenden Einfassungsrand der Bildschirme heraus, so dass die Bildschirme eine über dem Gerätegehäuse schwebende Anmutung erhalten sollen.

Derartige LED-Bänder sind beispielsweise aus der Schrift JP 09-258676 bekannt.

Aus der US 2010/0027255 A1 ist eine Lichtbox bekannt, wie sie beispielsweise zum Hinterleuchten von Röntgenbildern verwendet wird, wobei ein beleuchtbares Paneel von einem modular aufgebauten Rahmen eingefasst ist, in dem eine nach innen offene, nutförmige Ausnehmung zur Aufnahme von LEDs vorgesehen ist. Das von den LEDs abgegebene Licht wird aus der nach innen offenen Nut in die Schmalseiten des beleuchtbaren Paneels eingespeist, um das besagte Paneel zu beleuchten.

Derartige Leuchtrahmen zur Einfassung von Bildschirmen sind bislang mit diversen Nachteilen behaftet. Beispielsweise werden bei Spielgeräten bisweilen Bildschirme unterschiedlicher Formate verwendet, was bislang dazu führt, dass verschiedene Leuchtrahmenformate bereitgehalten werden müssen bzw. bei Verwendung nur eines, ausreichend großen Leuchtrahmenformats kleinere Bildschirme nicht passend eingefasst werden können und ggf. Blendungserscheinungen und schlechtere Sichtbarkeit in Kauf genommen werden müssen. Unabhängig hiervon ist die Anordnung der Leuchtmittel bislang alles andere als optimal. Blendungswirkungen auf den Bildschirmbetrachter bzw. Spielgerätebediener gehen einher mit schlechter Ausleuchtung und geringer Leuchtwirkung.

Der vorliegenden Erfindung liegt die Aufgabe zugrunde, ein verbessertes Leuchtrahmensystem der eingangs genannten Art und ein verbessertes Spielgerät mit einem solchen Leuchtrahmensystem zu schaffen, die Nachteile des Standes der Technik vermeiden und Letzteren in vorteilhafter Weise weiterbilden. Insbesondere soll ein günstig herzustellendes, für verschiedene Bildschirmformate und -größen einfach zu verwendendes Leuchtrahmensystem geschaffen werden, welches hohe Beleuchtungsstärken und helle Ausleuchtung ermöglicht, ohne einen Bildschirmbetrachter zu blenden und die Sichtbarkeit der Bildschirmdarstellung zu beeinträchtigen.

Diese Aufgabe wird erfindungsgemäß durch ein Leuchtrahmensystem gemäß Anspruch 1 sowie ein Spielgerät gemäß Anspruch 13 gelöst. Bevorzugte Ausgestaltungen der Erfindung sind Gegenstand der abhängigen Ansprüche.

Es wird also vorgeschlagen, die Leuchtmittel zum Rahmeninnenraum hin abzuschatten bzw. abzublenden, so dass das von den Leuchtmitteln abgegebene Licht von dem vom Rahmen eingefassten Rahmeninnenraum, in dem bestimmungsgemäß die Anzeigevorrichtung angeordnet wird, ferngehalten und im Wesentlichen vollständig von der Rahmenvorderseite weg in den vor der Rahmenvorderseite liegenden Halbraum hin abgestrahlt wird. Erfindungsgemäß sind dem am Rahmen vorgesehenen Leuchtmittel Abblendmittel zum Abschatten des Rahmeninnenraums gegen von dem Leuchtmittel abgestrahltes Licht zugeordnet. Durch die genannten Abblendmittel fällt von den Leuchtmitteln abgestrahltes Licht nicht in den genannten Rahmeninnenraum, sondern ist im Wesentlichen vollständig zur Rahmenvorderseite hin abstrahlbar. Hierdurch wird ein Leuchtrahmensystem mit hoher Beleuchtungsstärke und heller Ausleuchtung und damit guter Sichtbarkeit geschaffen, ohne die Sichtbarkeit der Bildschirmdarstellung durch Streulicht und Lichtreflexe zu beeinträchtigen, auch wenn lichtstarke Leuchtmittel mit hohen Leistungen verwendet werden.

Die genannten Abblendmittel können grundsätzlich verschieden ausgebildet sein. Dabei sind die Abblendmittel am Rahmen vorgesehen, insbesondere von einem Rahmenabschnitt gebildet oder sie bilden einen Rahmenteil, der die Leuchtmittel zum Rahmeninnenraum hin abblendet bzw. abschattet. Vorzugsweise kann eine sich zwischen Leuchtmittel und Rahmeninnenraum erstreckende Abblendnase am Rahmen angebracht sein, beispielsweise in Form einer länglichen Profilleiste oder -nase am Rahmen. Alternativ oder zusätzlich zu solchen Abblendmitteln am Rahmen können auch an den Leuchtmitteln selbst Abblendmittel angebracht sein, beispielsweise in Form einer an den Leuchtmitteln angebrachten Abblendnase, die an einem LED- oder Leuchtmittelhalter befestigt oder darin integriert sein kann.

Dabei sind die Leuchtmittel im Rahmen versenkt angeordnet derart, dass das von den Leuchtmitteln abgegebene Licht von dem vom Rahmen eingefassten Rahmeninnenraum ferngehalten und im Wesentlichen vollständig zur Rahmenvorderseite hin abgestrahlt wird. Ferner besitzen mehrere Rahmenteile eine vorzugsweise rillenförmige, zur Rahmenvorderseite hin offene Profilausnehmung zur Aufnahme und versenkten Anordnung der Leuchtmittel, wobei die Leuchtmittel zu dem Rahmeninnenraum hin, in dem die Anzeigeeinheit bestimmungsgemäß anzuordnen ist, abgeblendet angeordnet sind, so dass von den Leuchtmitteln abgestrahltes Licht nicht in den genannten Rahmeninnenraum fällt, sondern im Wesentlichen vollständig zur Rahmenvorderseite hin abstrahlbar ist.

Die Leuchtmittel des Leuchtrahmensystems können vorteilhafterweise in mehreren und/oder allen Rahmenteilen versenkt angeordnet sein. Die Rahmenteile besitzen hierzu eine vorzugsweise rillenförmige Profilausnehmung in Form einer vorzugsweise nutförmigen, sich über mehrere oder alle Rahmenteile hinweg erstreckenden Profilsenke, aufweisen, in der die genannten Leuchtmittel angeordnet werden können. Die genannte Profilausnehmung kann hierbei umlaufend über den gesamten Rahmen vorgesehen werden, so dass die Leuchtmittel variabel an den gewünschten Stellen positioniert werden können. Die vorzugsweise etwa nutförmige Profilausnehmung kann insbesondere in der Rahmenvorderseite ausgebildet und ist zu dem vor der Rahmenvorderseite liegenden Halbraum hin offen ausgebildet sein, so daß die in der Profilausnehmung aufgenommenen Leuchtmittel von der Rahmenvorderseite weg in den genannten Halbraum strahlen können.

In vorteilhafter Weiterbildung der Erfindung kann über die Schnittstellen zwischen den Rahmenteilen hinweg ein durchgehendes Leuchtmittelband beispielsweise in Form eines LED-Bands vorgesehen und an den Rahmen montiert werden.

Die Rahmenteile können vorteilhafterweise jeweils einen bauchigen, zu einer Rahmenvorderseite hin, d.h. zu einem Bildschirmbetrachter hin vorspringenden Profilabschnitt umfassen, in dem die genannte Profilausnehmung zur Aufnahme der Leuchtmittel ausgebildet sein kann.

Durch das Vorsehen einer solchen Profilausnehmung können die Leuchtmittel zu einem im Rahmeninneren angeordneten Bildschirm hin abgedeckt angeordnet werden, so dass ein unerwünschter Lichteinfall von den Leuchtmitteln her auf den Bildschirm vermieden wird. Dementsprechend bleibt die Sichtbarkeit und der Kontrast der Bildschirmdarstellung von hoher Qualität.

Zusätzlich zu einer solchen Profilausnehmung können die Rahmenteile wie bereits erwähnt mit einer den Leuchtmitteln zugeordneten Abblendnase versehen sein, um die Leuchtmittel zum Rahmeninneren hin abzublenden. Die genannte Abblendnase kann beispielsweise in Form einer ausbauchenden, leistenartigen Profilkontur ausgebildet sein. Wird in der vorgenannten Weise eine versenkte Anordnung der Leuchtmittel bzw. eine Profilausnehmung zur Aufnahme der Leuchtmittel in den Rahmenteilen vorgesehen, kann die zur Rahmeninnenseite hin angeordnete Flanke der Profilausnehmung als Abblendnase dienen und/oder entsprechend ausgebildet werden, insbesondere durch eine ausreichende Höhe, um die Leuchtmittel zum Rahmeninneren und einem dort angeordneten Bildschirm hin abzublenden.

Durch eine zum Rahmeninnenraum hin abgeblendete Anordnung der Leuchtmittel wird verhindert, dass von den Leuchtmitteln abgestrahltes Licht in den genannten Rahmeninnenraum fallen kann. Hierdurch werden zum einen unerwünschte Spiegelungen auf dem Bildschirm vermieden und ein ausreichend hoher Kontrast des Bildschirms sichergestellt. Zum anderen fällt das vom Leuchtrahmen abgegebene Licht auch nicht direkt in die Augen eines Bildschirmbetrachters.

In vorteilhafter Weiterbildung der Erfindung sind die Leuchtmittel am Rahmen derart abgeblendet angeordnet, dass die Augen eines bestimmungsgemäß vor dem Bildschirm stehenden Bildschirmbetrachters nicht direkt in die Leuchtmittel blicken können bzw. von den Leuchtmitteln abgegebenes Licht nicht direkt in die Augen des Bildschirmbetrachters fällt.

Der genannte Rahmeninnenraum, der durch die Abblendmittel gegenüber den Leuchtmitteln abgeschattet ist, umfaßt zumindest den Raumbereich, der von dem Rahmen eingefaßt ist und in dem die Anzeigeeinheit bestimmungsgemäß anzuordnen ist, also zumindest die durch die Bildschirmoberfläche gehende, von den Rahmenteilen definierte Rahmenebene, und kann sich vorteilhafterweise auch ein Stück weit über die Rahmenkontur nach vorne über die Rahmenvorderseite hinaus zum Betrachterplatz hin erstrecken bzw. vorspringen, bspw. in Form eines vom Rahmen begrenzten Innenraumzylinders oder -prismas bzw. -kegels, dessen Hauptachse im Wesentlichen einer bestimmungsgemäßen Blickachse auf die Anzeigeeinheit bzw. einer Senkrechten auf die Rahmenebene entspricht, die von den Rahmenteilen definiert wird.

Durch die Abblendung der Leuchtmittel zum Bildschirm bzw. zum Betrachter hin können Leuchtmittel verwendet werden, die hohe Lichtstärken erzeugen. Hierdurch kann in einem Fernbereich, beispielsweise in einem Casino eine gute Sichtbarkeit und damit eine hohe Aufmerksamkeit für potentielle Kunden erzielt werden, während dennoch im Nahbereich die Leuchtkraft des Rahmensystems nicht als störend empfunden wird. Das Leuchtrahmensystem bildet somit ein einfaches und dennoch wirksames Mittel zur Werbung, welches interessierte Nutzer und potentielle Kunden aus der Ferne anzuziehen vermag, ohne im Nahbereich störend zu wirken.

Um das von den am Rahmen angebrachten Leuchtmitteln abgegebene Licht gezielt in die gewünschte Richtung zu lenken, kann den Leuctmitteln eine Optik insbesondere in Form einer Linsen- und/oder Reflektoranordnung zugeordnet sein, die zumindest einen Teil des von den Leuchtmitteln abgegebene Lichts einfängt und gezielt in eine vorbestimmte Abstrahlrichtung abstrahlt, insbesondere im wesentlichen senkrecht zur Rahmenebene weg von der Rahmenvorderseite. Die Optik kann dabei derart beschaffen sein, daß das abgestrahlte Licht sich um die genannten Abstrahlrichtung kegel- oder keilförmig aufweitet, bspw. unter einem Winkel von ± 10° oder einem anderen gewünschten Aufweitungswinkel.

Insbesondere kann dabei an dem Rahmen in Weiterbildung der Erfindung zumindest ein Reflektor angeordnet sein, welcher das Licht der Leuchtmittel einfängt und in die gewünschte Strahlrichtung umlenkt bzw. abstrahlt. Je nach Beleuchtungsaufgabe kann diese Abstrahlrichtung unterschiedlich orientiert sein, wobei mehreren Leuchtmitteln auch mehrere, in verschiedene Richtungen abstrahlende Reflektoren zugeordnet sein können, um partiell bzw. selektiv verschiedene Bereiche auszuleuchten.

Um in einigem Abstand von dem Leuchtrahmensystem noch größere Lichtstärken bzw. Beleuchtungsstärken zu erzielen, ohne einen nahe am Bildschirm bzw. Leuchtrahmensystem stehenden Betrachter zu blenden, kann der zumindest eine Reflektor in Weiterbildung der Erfindung derart ausgebildet und relativ zum Leuchtmittel angeordnet sein, dass das von dem Reflektor eingefangene Licht von der Rahmenvorderseite weg in einen Raumbereich bzw. Halbraum vor dem Rahmen hin abgestrahlt wird und/oder von der vom Rahmen eingefassten Anzeigeeinheit weg abgestrahlt wird. Insbesondere kann der Reflektor das Licht in einer Richtung im wesentlichen senkrecht zur Rahmenebene abstrahlen, wobei die Abstrahlung nach Art eines Lichtkegels bzw. -keils bei der Abstrahlung vom Reflektor eine Aufweitung erfahren kann. Je nach der gewünschten Lichtausbreitung kann die genannte Abstrahlrichtung auch Abweichungen von ± 5° oder ± 10° oder auch ± 25 ° oder auch noch größere Abweichungen von der genannten Senkrechten zur Rahmenebene aufweisen.

Durch die Verwendung von Reflektoren können die Leuchtmittel freier und unabhängiger von der gewünschten Abstrahlrichtung angeordnet werden, sowohl was ihre Position als auch ihre Ausrichtung anbelangt. Insbesondere wird es hierdurch möglich, Primärlicht aus den Leuchtmitteln von den eingefassten Bildschirmen bzw. den Bildschirmbetrachtern fernzuhalten und Sekundärlicht, d.h. von den Reflektoren reflektiertes Licht gezielt in die gewünschte Richtung zu lenken.

In Weiterbildung der Erfindung kann der genannte zumindest eine Reflektor in der Profilausnehmung angeordnet sein, in der die Leuchtmittel versenkt aufgenommen sind. Insbesondere kann eine äußere, d.h. bezüglich der Leuchtmittel auf der Außenseite des Rahmens liegende Flanke der Profilausnehmung reflektierend ausgebildet sein bzw. mit einem Reflektor versehen sein.

In vorteilhafter Weiterbildung der Erfindung können die Leuchtmittel derart angeordnet sein, dass eine Hauptachse des von den Leuchtmitteln abgegebenen Lichts im Wesentlichen radial von einer Rahmenmitte wegweist, wobei sich die Hauptachse insbesondere etwa senkrecht zur Längsachse des Rahmenteils, an dem das Leuchtmittel angeordnet ist, und zumindest näherungsweise parallel zur Rahmenebene erstrecken kann. Je nach Rahmenkonfiguration können dabei Abweichungen von ± 10° oder auch ± 25 ° von der genannten Ausrichtung der Hauptachse vorgesehen sein können. Bei Verwendung von LEDs als Leuchtmittel, strahlen diese das Licht an sich in einen Halbraum ab, dessen Hauptachse üblicherweise senkrecht durch den LED-Träger bzw. die LED-Platine geht. Um das dann an sich in die falsche Richtung gestrahlte Licht in die gewünschte Abstrahlrichtung umzulenken, kann ein Reflektor eine sich in Rahmenumfangsrichtung erstreckende, zu der genannten Hauptachse schräg angestellte Reflektorfläche umfassen. Die genannte Reflektorfläche kann von der äußeren Profilausnehmungsflanke gebildet sein.

Dabei kann ein modularer Aufbau für den Rahmen vorgesehen sein, der aus mehreren austauschbaren modularen Elementen variabel zusammenfügbar ist. Um Rahmen unterschiedlichen Formats und/oder unterschiedlicher Größe und/oder Form für verschiedene Bildschirme günstig herstellen und einfach montieren zu können, wird der Rahmen vorteilhafterweise aus zueinander kompatiblen, gegeneinander austauschbaren und in unterschiedlicher Konfiguration zusammensetzbaren Rahmenmodulen zusammengesetzt, wobei die Rahmenteile miteinander verbunden werden, um eine feste Rahmenstruktur zu erhalten. Insbesondere ist der Rahmen aus mehreren Rahmenteilen zusammengesetzt, die miteinander verbunden und an ihren Endabschnitten zueinander komplementäre, formschlüssig in Eingriff bringbare Verbindungsmittel aufweisen. Durch die zueinander komplementären Verbindungsmittel an den Endabschnitten der Rahmenteile können diese gegeneinander ausgetauscht werden, so dass verschiedene Rahmen mit einer begrenzten Anzahl an Rahmenteilen einfach konfiguriert und montiert werden können.

Hierbei können grundsätzlich verschiedene Rahmenformen konfiguriert werden, beispielsweise U-förmige, oder auch nur L-förmige Rahmen, die an einer oder mehreren Seiten offen sind. Insbesondere jedoch können umlaufend ringförmig geschlossene Rahmen konfiguriert werden, die dann einen oder mehrere Bildschirme allseitig einfassen können.

Um eine einfache Montage zu ermöglichen, gleichzeitig aber eine stabile Rahmenstruktur zu erreichen, können in Weiterbildung der Erfindung die genannten Verbindungsmittel an den Endabschnitten der Rahmenteile zusammensteckbare Steckprofilabschnitte umfassen, so dass die Rahmenteile vorzugsweise werkzeugfrei in einfacher Weise aneinanderfügbar sind und zu einer festen, mechanisch stabilen Struktur verbindbar sind. Gegebenenfalls können zusätzlich zu den genannten Steckprofilabschnitten weitere Verbindungsmittel vorgesehen werden, beispielsweise Schrauben oder Schnellspannmittel wie Klemmhalter, wobei die genannten Verbindungsmittel ggf. auch mit einem entsprechenden Werkzeug, beispielsweise einem Schraubendreher betätigt werden können.

Um eine stabile Verbindung zu erreichen, können die genannten Steckprofilabschnitte im Rahmenquerschnitt betrachtet aneinander angepasste Querschnittskonturen besitzen, so dass zwei Steckprofilabschnitte im zusammengesteckten Zustand flächig miteinander in Passungseingriff stehen. Um eine verwindungssteife Verbindung zu erzielen, können die genannten Steckprofilabschnitte dreidimensional gewölbt oder bauchig ausgebildet sein und mit dreidimensionalen Eingriffskonturen flächig aneinander anliegen. Insbesondere können die Steckprofilabschnitte als Knickspantkonturen ausgebildet sein, deren Knickspant-Längsrichtung in Steckrichtung verläuft. Vorteilhafterweise sind die Steckprofilabschnitte derart ausgebildet, dass sie in Rahmenlängs- und/oder Rahmenumfangsrichtung zusammensteckbar sind.

In vorteilhafter Weiterbildung der Erfindung sind die Steckprofilabschnitte derart konturiert, dass die Rahmenteile zumindest vorderseitig bzw. sichtseitig nahtlos bzw. stufenfrei aneinanderfügbar sind. Obwohl benachbarte, miteinander verbundene Rahmenteile einander durch ihre Steckabschnitte überlappen, ist die Steckverbindung vorteilhafterweise so ausgeführt, dass die Rahmenkontur bzw. die Profilkontur über die Schnittstelle der beiden Rahmenteile hinweg kontinuierlich fortgesetzt ist.

In Weiterbildung der Erfindung kann ein jeweiliger Rahmenteil im Bereich seines Steckprofilabschnitts einen stufenförmigen Profilabsatz umfassen, an dem ein sichtbarer Profilabschnitt des genannten Rahmenteils in den genannten Steckprofilabschnitt übergeht. Der Steckprofilabschnitt setzt die Profilkontur des genannten sichtbaren Profilabschnitts vorteilhafterweise stufenförmig versetzt fort, so dass der Steckprofilabschnitt passgenau hinter die Rückseite des sichtbaren Profilabschnitts eines benachbarten Rahmenteils steckbar ist und mit dem genannten Profilabschnitt des benachbarten Rahmenteils dabei flächig passgenau in Eingriff gelangt. Die mehreren Rahmenteile können verschieden geformte Rahmenteile umfassen, um verschiedene Rahmenformen erzeugen zu können. Insbesondere können gerade und ungerade, insbesondere bogenförmig gekrümmte und/oder abgeknickte Rahmenteile Verwendung finden und miteinander kombiniert bzw. aneinandergefügt werden.

Nach einem weiteren, ggf. eigenständigen Aspekt der Erfindung können die ungeraden Rahmenteile aus einem anderen Material gefertigt werden als die ungeraden Rahmenteile. Hierdurch können verschiedene Materialeigenschaften genutzt und beispielsweise Toleranzen ausgeglichen oder bessere Passverbindungen erzielt werden, beispielsweise durch Verwendung von harten und weichen und/oder steifen und elastischen Materialien erzielt werden. Weiterhin kann die Fertigung für die verschiedenen Formen der Rahmenteile vereinfacht werden.

Insbesondere können die ungeraden, vorzugsweise bogenförmigen Rahmenteile aus Kunststoff gefertigt sein, während die geraden Rahmenteile als Metallteile ausgebildet sein können. In Weiterbildung der Erfindung werden die runden bzw. bogenförmigen Rahmenteile aus Kunststoff spritzgegossen, während die geraden Rahmenteile als Blechbiegeprofile bzw. Blechkantprofile ausgebildet sein können.

Werden in der vorgenannten Weise die Steckprofilabschnitte durch stufenförmige Profilabsätze ausgebildet, können die gebogenen und/oder aus Kunststoff gefertigten Rahmenteile solche mit stufenförmigen Profilabsätzen geformten Steckprofilabschnitte aufweisen, vorzugsweise an beiden ihrer Endabschnitte, während die geraden und/oder aus Metall gefertigten Rahmenteile Steckprofilabschnitte ohne Profilabsätze besitzen können.

Durch den modularen Aufbau des Rahmens erhält das Leuchtrahmensystem eine hohe Variabilität, die es ermöglicht, das Leuchtrahmensystem wahlweise einem Einzelgerät oder einer Gerätegruppe, insbesondere Spielgerätegruppe zuzuordnen.

Beispielsweise kann das Leuchtrahmensystem bei entsprechender Konfiguration seiner Rahmenteile unmittelbar an einem einzelnen, separaten Spielgerät angebracht werden. Bei entsprechend anderer Konfiguration der Rahmenteile kann das Leuchtrahmensystem aber auch einer Spielgerätegruppe zugeordnet werden, beispielsweise einen oder mehrere Großbildschirme einfassen, auf dem bzw. auf denen ein für mehrere Spieler bzw. Spielgeräte bestimmtes Spiel beispielsweise in Form eines Bonusspiels anzeigbar ist.

Das Leuchtrahmensystem kann dabei derart angeordnet sein, dass die Spielgeräte frontal zu dem Leuchtrahmen ausgerichtet sind, insbesondere derart, dass die Nutzerplätze der Spielgeräte in dem abgeblendeten Innenbereich des Rahmens liegen. Alternativ oder zusätzlich kann das Leuchtrahmensystem jedoch auch einer Geräteinsel zugeordnet sein, beispielsweise dergestalt, dass eine Gruppe von Geräten, insbesondere Spielgeräten inselförmig oder ringförmig zueinander angeordnet werden, wobei den mehreren Geräten ein oder mehrere Bildschirme gemeinsam zugeordnet sind, die von einem oder mehreren Leuchtrahmensystemen eingefasst sind. Beispielsweise können im Zentrum der Insel zu gegenüberliegenden Seiten hin ausgerichtete Bildschirme beispielsweise Rücken an Rücken angeordnet und von einem Leuchtrahmensystem, das dann vorteilhafterweise zu gegenüberliegenden Seiten hin leuchtend ausgebildet ist bzw. mit zu gegenüberliegenden Seiten hin strahlenden Leuchtmitteln versehen ist, oder durch mehreren Leuchtrahmensysteme eingefasst sein. Alternativ oder zusätzlich können einer solchen Gerätegruppe auch mehrere zu verschiedenen Seiten hin ausgerichtete Bildschirme zugeordnet sein, die dann von entsprechenden, ebenfalls zu verschiedenen Seiten hin ausgerichteten Leuchtrahmensystemen eingefasst sein können, beispielsweise in einer ringförmigen bzw. polygonförmigen Anordnung.

In vorteilhafter Weiterbildung der Erfindung bildet das Leuchtrahmensystem eine selbsttragende Struktur, die nicht erst durch Befestigung an einem Spielgerätegehäuse oder an einem einzufassenden Bildschirm eine formstabile Einheit bildet. In Weiterbildung der Erfindung können zumindest einige der Rahmenteile vorzugsweise plattenförmige Halteflansche umfassen, die von den dreidimensional konturierten Rahmenprofilabschnitten zum Rahmeninnenraum hin vorspringen können und vorteilhafterweise miteinander verbunden sein können, um den miteinander verbundenen Rahmenteilen zusätzliche Strukturfestigkeit zu geben. Insbesondere können die genannten Halteflansche zueinander komplementäre, formschlüssig in Eingriff bringbare Verbindungsmittel aufweisen, mittels derer die Halteflansche von verschiedenen Rahmenteilen miteinander fest verbunden werden können. Beispielsweise können die genannten Verbindungsmittel Formschlussteile umfassen, die nach Art on Schlüssel und Schlüsselloch bzw. nach Art von Puzzleteil-Anschlussstücken konturiert und formschlüssig verriegelt werden können.

Im verbundenen Zustand können die genannten Halteflansche sich zumindest näherungsweise in einer gemeinsamen Ebene erstrecken, die zumindest näherungsweise parallel zur Rahmenebene ausgerichtet ist, vorteilhafterweise koplanar zur Rahmenebene ist. Diese von den Halteflanschen gemeinsam definierte Ebene kann gleichzeitig als Anlagefläche für einen einzufassenden Bildschirm dienen, insbesondere wenn dieser ein Flachbildschirm ist.

Alternativ oder zusätzlich zu der Verbindung der genannten Halteflansche miteinander können die genannten Halteflansche an einem zentralen, gemeinsamen Rahmenträger befestigt sein, der sich vorteilhafterweise in dem vom Rahmen eingeschlossenen Rahmeninnenraum erstrecken kann. Der genannte Rahmenträger kann beispielsweise als Trägerprofil, beispielsweise Fachwerkprofil ausgebildet sein, ggf. jedoch auch als chassisartiges Formteil ausgebildet sein.

In Weiterbildung der Erfindung kann an dem Rahmen ein Bodenständer angebracht sein, durch den das Leuchtrahmensystem freistehend im Raum auf dem Boden aufstellbar ist. Alternativ oder zusätzlich, ggf. nach Demontage des genannten Bodenständers kann der Rahmen auch Wandanschlussmittel besitzen, um an einer Wand befestigt zu werden. Wiederum alternativ oder zusätzlich kann der Rahmen Paneelanschlussmittel umfassen, um beispielsweise an einem Gehäusepaneel beispielsweise eines Spielgeräts montiert zu werden.

In Weiterbildung der Erfindung können an dem Rahmen Befestigungsmittel zur Befestigung zumindest eines Bildschirms vorgesehen sein, wobei die genannten Befestigungsmittel in Weiterbildung der Erfindung an dem im Rahmeninnenraum angeordneten Rahmenträger vorgesehen sein können.

Die Erfindung wird nachfolgend anhand eines bevorzugten Ausführungsbeispiels und zugehöriger Zeichnungen näher erläutert. In den Zeichnungen zeigen:
- Fig. 1:: eine schematische, perspektivische Darstellung eines Leuchtrahmensystems nach einer vorteilhaften Ausführung der Erfindung, bei der der Rahmen drei nebeneinander angeordnete Flachbildschirme umschließt,
- Fig. 2:: eine schematische, perspektivische und teilweise skelettierte Darstellung des Leuchtrahmensystems ähnlich Fig. 1, wobei ein im Rahmeninnenraum angeordneter Rahmenträger, an dem die Rahmenteile befestigt sind, gezeigt ist,
- Fig. 3:: eine perspektivische Explosionsdarstellung von drei der Rahmenteile, die die Steckprofilabschnitte der Rahmenteile zeigt, mittels derer die Rahmenteile miteinander verbindbar sind,
- Fig. 4:: eine perspektivische Einzeldarstellung eines S-förmig gekrümmten Rahmenteils, die die an den Endabschnitten angeformten, durch einen Profilabsatz abgesetzten Steckprofilabschnitte zeigt,
- Fig. 5:: eine perspektivische Einzeldarstellung eines geraden Rahmenteils, dessen Endabschnitte selbst ohne Profilabsatz die Steckprofilabschnitte bilden,
- Fig. 6:: eine perspektivische Einzeldarstellung eines bogenförmig gekrümmten Rahmenteils, die die umlaufende Profilausnehmung zur Aufnahme der Leuchtmittel zeigt,
- Fig. 7:: eine Schnittansicht durch ein Rahmenteil, die die ausbauchende Rahmenprofilkonturierung und die darin ausgebildete, rillenförmige Profilvertiefung sowie die Anordnung der Leuchtmittel in dieser Profilvertiefung zeigt, und
- Fig. 8:: eine ausschnittsweise Schittansicht durch ein Rahmenteil ähnlich Fig. 7, die eine dem Leuchtmittel direkt zugeordnete Abblendnase zeigt.

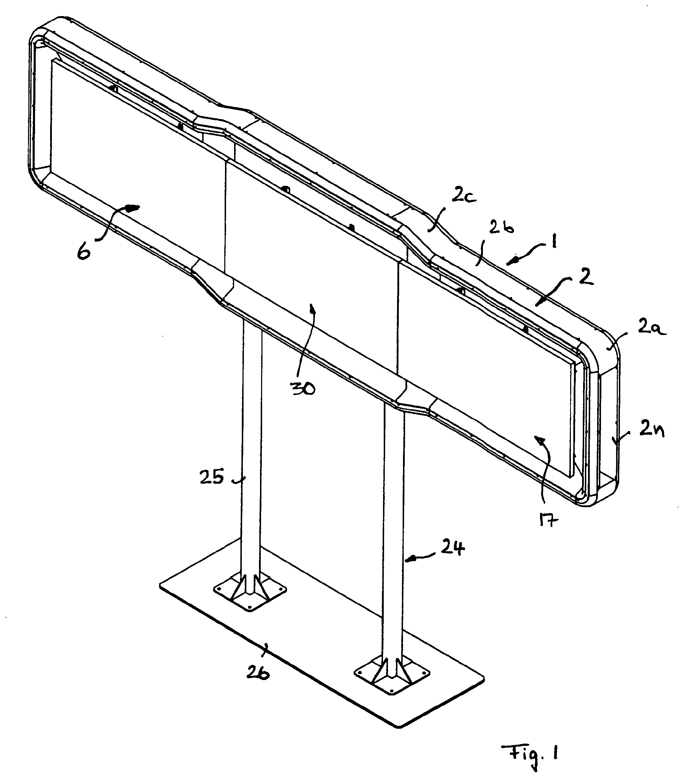

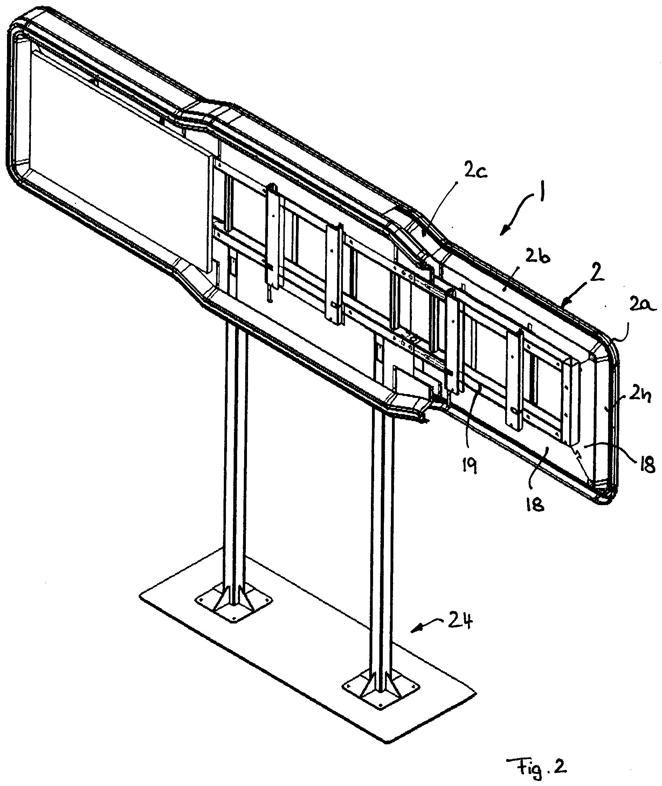

Wie die Figuren 1 und 2 zeigen, kann ein Leuchtrahmensystem 1 in Form einer selbsttragenden Struktur ausgebildet sein und einen Bodenständer 24 aufweisen, mit dem das Leuchtrahmensystem 1, sowie gegebenenfalls an dem Bodenständer 24 befestigten Bildschirme 6, freistehend auf dem Boden aufgestellt werden kann. Beispielsweise kann der genannte Bodenständer 24 zwei Stützfüße 25 umfassen, die mit einer Bodenplatte 26 verbunden sind. Das Leuchtrahmensystem 1 kann alternativ Wandbefestigungsmittel zur Befestigung an einer Wand aufweisen oder an einer Spielgerätekonsole montiert werden.

Wie Fig. 2 zeigt, kann das Leuchtrahmensystem 1 einen Rahmenträger 19 umfassen, der wie im vorliegenden Fall beispielsweise als Skelettstruktur ausgebildet ist oder von einem Stabwerk gebildet sein kann. Der Rahmenträger 19 ist an dem genannten Bodenständer 24 befestigt und trägt den Rahmen 2, der einen oder mehrere Bildschirme 6 einfasst.

Der genannte Rahmenträger 19 kann eine ebene, flache Struktur bilden und in dem Rahmeninnenraum angeordnet sein, der von dem Rahmen 2 umschlossen wird, wobei der Rahmenträger 19 sich vorteilhafterweise in der von dem Rahmen 2 definierten Ebene erstrecken oder parallel hierzu angeordnet sein kann.

Der zumindest eine Bildschirm 6 kann an dem genannten Rahmenträger 19 befestigt werden, ggf. aber auch alternativ oder zusätzlich an dem Rahmen 2 befestigt sein, welcher Rahmen 2 an dem genannten Rahmenträger 19 montiert ist.

Wie die Figuren 1 und 2 zeigen, kann der Rahmen 2 grundsätzlich eine näherungsweise rechteckige, ringförmig geschlossene Konturierung besitzen, wobei der genannte Rahmen 2 jedoch nicht exakt rechteckig bzw. aus vier exakt geraden Schenkeln zusammengesetzt sein muss, sondern auch Rundungen und ausbauchende bzw. geknickte Abschnitte umfassen kann.

Der genannte Rahmen 2 ist vorteilhafterweise aus mehreren modularen Rahmenteilen 2a, 2b, 2c, ..., 2n zusammengesetzt, wobei die genannten Rahmenteile 2a, 2b, 2c, ..., 2n vorteilhafterweise bogenförmig gekrümmte bzw. abgerundet konturierte Rahmenteile 2a, abgeknickte und/oder gegenläufig, insbesondere S-förmig gebogene bzw. geknickte Rahmenteile 2c und gerade Rahmenteile 2b umfassen kann. Durch Rahmenteile mit geraden, gekrümmten und/oder geknickten Längsachsen können verschieden geformte Rahmen 2 zusammengebaut werden, deren Konturierung an die einzufassenden Bildschirme angepasst werden kann. Wie Fig. 2 zeigt, können die Rahmenteile 2a mit bogenförmig konturierter Längsachse die abgerundeten "Ecken" des Rahmens 2 bilden, während Rahmenteile 2c mit gegenläufig geknickten bzw. S-förmig konturierten Längsachsen in Mittelabschnitten des Rahmens 2 eingebaut werden können, um Rahmenausbuchtungen zu formen.

Die Rahmenteile 2a, 2b, 2c, ..., 2n besitzen an ihren Endabschnitten 7 und 8 Verbindungsmittel 9, mittels derer die Rahmenteile direkt miteinander verbunden werden können. Die genannten Verbindungsmittel 9 sind vorteilhafterweise Steckverbindungsmittel bzw. können sie als Steckprofilabschnitte 10 und 11 ausgebildet sein, die durch Zusammenstecken zwei benachbarter Rahmenteile formschlüssig miteinander verbinden und starr zusammenhalten.

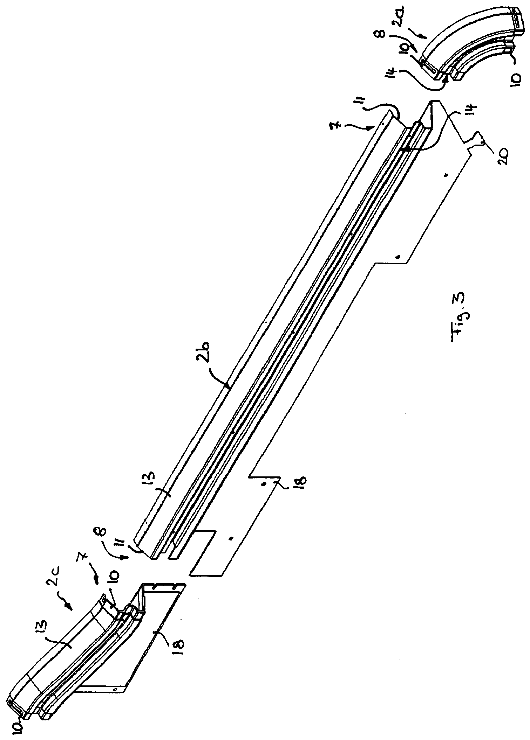

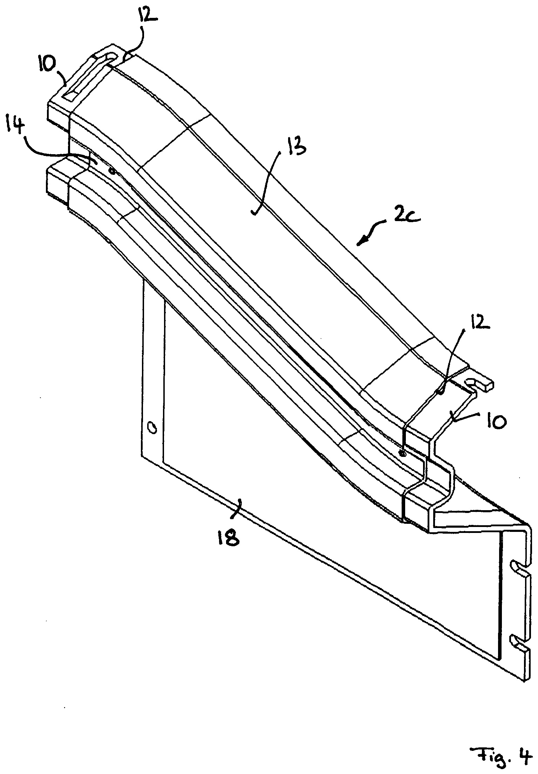

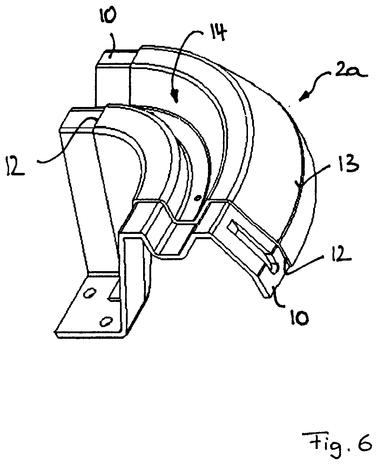

Wie Fig. 3 sowie die Figuren 4 und 6 zeigen, können an den abgerundeten bzw. geknickten Rahmenteilen 2a und 2c die genannten Steckprofilabschnitte 10 durch einen Profilabsatz 12 gegenüber den angrenzenden Rahmenprofilabschnitten abgesetzt sein, insbesondere zu einer Rahmenrückseite hin versetzt sein. Die genannten Steckprofilabschnitte 10 setzen hierbei jedoch die Konturierung der angrenzenden Rahmenprofilabschnitte fort bzw. entsprechen sie den angrenzenden Rahmenprofilabschnitten im Profilquerschnitt. Hierdurch können die genannten Steckprofilabschnitte 10 flächig passgenau auf die Rückseite des Rahmenprofils des benachbarten geraden Rahmenteils 2b gesetzt werden bzw. rückseitig an das gerade Rahmenteil 2b angesteckt werden. Bei dem genannten geraden Rahmenteil 2b bilden dessen Endabschnitte die Steckprofilabschnitte 11, die ohne Profilabsatz von der Profilierung des Rahmenteils 2b gebildet sind.

Im zusammengesetzten Zustand bilden die Rahmenteile 2a, 2b, 2c, ..., 2n ein durchgehend gleichförmiges, insbesondere stufenfrei und "glatt" über die Schnittstellen zwischen den Rahmenteilen hinweggehendes Rahmenprofil, welches vorteilhafterweise dreidimensional zur Rahmenvorderseite hin, d.h. zum Betrachter des Bildschirms hin ausbauchen kann bzw. konvex vorgewölbt sein kann, vgl. Fig. 1 und Fig. 2.

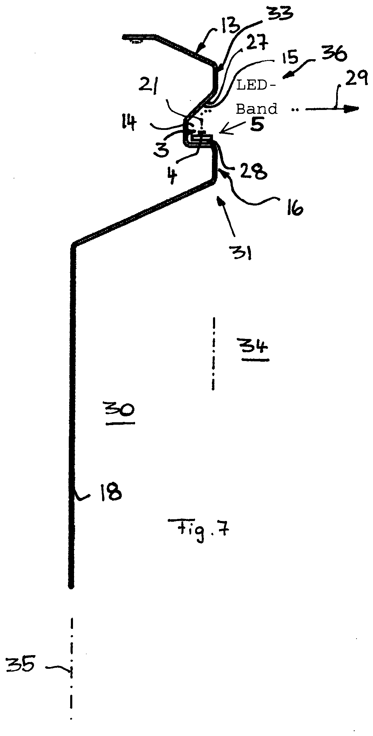

Der umlaufende Profilabschnitt 13 des Rahmens 2 kann hierbei im Querschnitt betrachtet jedoch auch konvex und gleichzeitig konkav ausgebildet sein. Insbesondere kann in den zur Rahmenvorderseite hin ausbauchenden Profilabschnitt 13 eine rinnenförmige bzw. nutförmige Profilausnehmung 14 in Form einer Profilvertiefung eingearbeitet sein, die gleichförmig über den gesamten Umfang des Rahmens 2 verlaufen bzw. ausgebildet sein kann, vgl. Fig. 7 in Verbindung mit Fig. 1.

In der genannten rinnenförmigen Profilausnehmung 14 sind Leuchtmittel 3 vorzugsweise in Form einer Vielzahl von reihenförmig angeordneten LEDs aufgenommen bzw. angeordnet, wobei die genannten LED 4 auf einer streifenförmigen Trägerplatine angeordnet sein können bzw. Teil eines LED-Bandes sein können, das in der genannten Profilausnehmung 14 angeordnet wird.

Wie Fig. 7 zeigt, kann das Leuchtmittel 3 dabei derart in der Profilausnehmung 14 angeordnet sein, dass eine Hauptachse 21 des von den LEDs 4 abgestrahlten Lichts quer zur Rahmenumfangsrichtung nach außen, insbesondere etwa radial nach außen verläuft und/oder sich zumindest näherungsweise parallel zu der von den Rahmenteilen 2a, 2b ...2n definierten Rahmenebene 35 erstreckt. Die Leuchtmittel 3 sind also derart angeordnet, dass sie von dem eingefassten Rahmeninnenraum weg nach außen strahlen.

Den Leuchtmitteln kann dabei eine Optik 36, die eine Linse und/oder einen Reflektor umfassen kann, zugeordnet sein, mittels derer das von den Leuchtmitteln abgegebene Licht eingefangen und im wesentlichen vollständig in einer vorbestimmten Abstrahlrichtung 29 abgestrahlt wird, wobei die genannte Abstrahlrichtung insbesondere etwa senkrecht zur Rahmenebene 35 von der Rahmenvorderseite weg orientiert sein kann, vgl. Fig. 7.

Insbesondere können die Leuchtmittel 3 hierbei auf einer inneren Flanke der rillenförmigen Profilausnehmung 14 angeordnet sein und auf die gegenüberliegende, äußere Flanke 27 der Profilausnehmung 14 strahlen. Die genannte äußere Flanke 27 kann als Reflektor 15 ausgebildet sein, beispielsweise durch eine verspiegelnde bzw. reflektierende Oberflächenbeschichtung. Dementsprechend ist der Reflektor 15 mehreren Leuchtmitteln zugeordnet. Der Reflektor 15 kann dabei nacht Art eines ebenen Spiegels ausgebildet sein, alternativ aber auch eine reliefartige, auf die Leuchtmittel-Anordnung bzw. Rasterverteilung angepaßte Oberflächenkonturierung besitzen, beispielswweise in Form eines Muldenraster oder Schalenrasters, so daß jedem Leuchtmittel 3 "seine" Reflektorfläche zugeordnet ist.

Alternativ oder zusätzlich können den Leuchtmitteln 3 aber auch einzeln Reflektoren zugeordnet sein, die bspw. direkt am Leuchtmittelträger angebracht und muschelförmig um das Leuchtmittel herum gekrümmt sein können. Insbesondere bei Verwendung von LEDs oder anderen kleinbauenden, insbesondere punktförmigen Lichtquellen können die Lichtquellen von beispielsweise kelch- oder flötenförmigen Reflektoren eingefaßt sein, die mittels eines hülsenförmigen Montagehalters an einer LED-Platine oder einem anderen Lichtquellenhalter befestigt sein können, wie dies beispielsweise die Schrift DE 102 50 383 A1 zeigt. Die Reflekoren können dabei im Reflektorboden eine Durchgangsausnehmung besitzen, durch die die LED oder allgemein die Lichtquelle in den Reflektorinnenraum eingesetzt sein und mit der LED-Leiterplatte verbunden sein kann. Bezüglich der Befestigung und Ausbildung solcher Reflektoren, die einzeln einer LED zugeordnet sind, wird auf die genannte Schrift DE 102 50 383 A1 verwiesen, deren Inhalt insoweit als Teil der vorliegenden Offenbarung anzusehen ist.

Um eine von der üblichen Abstrahlcharakteristik von LEDs, die an sich oft mehr oder weniger halbkugelförmig in einen Halbraum strahlen, abweichende, an die Rahmenbedingungen angepaßte Abstrahlcharakteristik zu erreichen, kann den LEDs oder ggf. auch anderen Leuchtmitteln 3 ein reflektiver Strahlformer zugeordnet sein, wie er beispielsweise aus der Schrift WO 2013/041137 A1 bekannt ist. Dabei kann der Strahlformer reflektierend ausgebildete Lichtdurchtritts- bzw. Strahlformöffnungen besitzen, durch deren Neigung und Länge die bewirkte Abstrahlcharakteristik, beispielsweise in Form eines bestimmten Abstrahlwinkels oder einer Ablenkung des Schwerpunkts der Winkelverteilung des abgestrahlten Lichtkegels, eingestellt werden kann. Bezüglich der Ausbildung und Anordnung eines solchen reflektive Strahlformers und dessen Zuordnung zu den LEDs bzw. Leuchtmitteln 3 wird auf die genannte Schrift WO 2013/041137 A1 verwiesen, deren Inhalt insoweit als Teil der vorliegenden Offenbarung anzusehen ist.

Besitzt der Rahmen 2 in der zuvor beschriebenen Weise eine Profilausnehmung 14, an deren Profil- bzw. Rahmenflanke 27 ein Reflektor 15 angebracht ist, kann die von den Leuchtmitteln 3 bestrahlte Rahmenflanke 27 bzw. der daran angebrachte Reflektor 15 vorteilhafterweise derart ausgerichtet sein, dass das reflektierte Licht im Wesentlichen senkrecht zur von dem Rahmen 2 definierten Ebene zur Rahmenvorderseite hin abgestrahlt wird, wie dies der Pfeil der Abstrahlrichtung 29 in Fig. 7 verdeutlicht.

Wie Fig. 7 zeigt, kann die Profilausnehmung 14, in der die Leuchtmittel 3 angeordnet sind, im Querschnitt betrachtet unterschiedlich konturierte Flanken 27 und 28 aufweisen. Insbesondere kann die innere Flanke 28 näherungsweise etwa senkrecht zu der vom Rahmen 2 definierten Rahmenebene verlaufen, während die äußere Flanke 27 hierzu spitzwinklig geneigt, beispielsweise unter einem Winkel von etwa 30° bis 60° geneigt sein kann.

Wie Fig. 7 zeigt, sind die Leuchtmittel 3 gegenüber dem vom Rahmen 2 eingeschlossenen Rahmeninnenraum 30 abgeblendet angeordnet, so dass von den Leuchtmitteln 3 abgegebenes Licht nicht auf den Bildschirm 6 im Rahmeninnenraum 30 fallen kann. Die zum Rahmeninnenraum 30 hin liegende Profilnase vor der Profilausnehmung 14 bildet eine Abblendnase 16, die die Leuchtmittel 3 gegenüber dem Rahmeninnenraum bzw. den dort angeordneten Bildschirmen 6 abblendet.

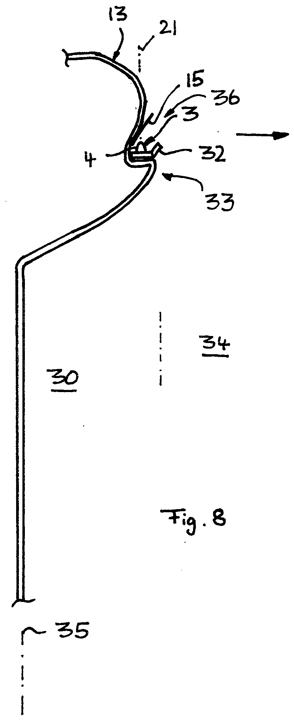

Wie Fig. 8 zeigt, kann auch direkt dem Leuchtmittel 3 eine Abblendnase 32 zugeordnet sein, die bspw. unmittelbar an der Leiterplatine bzw. dem Leuchtmittelhalter befestigt sein kann, auf dem das Leuchtmittel 3 sitzt, oder auf dem Leuchtmittel 3 selbst sitzen kann. Die Abblendnase 32 kann den Rahmeninnenraum 30 abschatten wie zuvor erläutert.

Die in dem Rahmen 2 versenkte, abgeblendete Anordnung der Leuchtmittel 3 und/oder die durch den Reflektor oder ggf. ein anderes optisches Mittel wie beispielsweise eine Linse erreichte Steuerung der Lichtabgabe der Leuchtmittel 3 kann insbesondere derart beschaffen sein, dass der Leuchtrahmen im Fernbereich eine höhere Leuchtkraft und/oder eine höhere Wahrnehmbarkeit und/oder eine höhere Lichtstärke und im Nahbereich an einem vorbestimmten Bildschirmbetrachterplatz zur Betrachtung eines eingefassten Bildschirms eine geringere Leuchtkraft und/oder geringere Wahrnehmbarkeit und/oder geringere Lichtstärke besitzt.

Insbesondere kann sich der abgeblendete Innenbereich soweit zur Rahmenvorderseite hin bzw. über die Rahmenvorderseite 33 hinaus erstrecken, dass ein auf dem bestimmungsgemäßen Betrachterplatz positionierter Betrachter nicht direkt in die im Rahmenversenkten Leuchtmittel blicken kann und/oder das nur ein geringer Bruchteil des abgegebenen Lichts auf den Betrachter fallen kann. Je nach Größe des Leuchtrahmensystems und der davon eingefassten Anzeigevorrichtung kann der besagte Betrachterplatz beispielsweise 0,3 m bis 2 m vom Leuchtrahmensystem beabstandet liegen, wobei bei sehr großen Leuchtrahmensystemen auch noch größere Betrachterplatzabstände von beispielsweise 5 m oder auch 10 m vorgesehen sein können.

Insbesondere können die im Rahmen angeordneten Leuchtmittel einen vom Rahmen ausgehenden Lichtkranz bestrahlen bzw. kann sich das abgegebene Licht in einem Kranz ausbreiten, der den Rahmeninnenraum ausspart, zumindest bis zum Betrachterplatz hin, wobei sich mit zunehmendem Abstand vom Rahmen der Lichtkranz aufweiten bzw. die Kranzdicke zunehmen kann, so dass im Fernbereich bzw. aus der Ferne betrachtet der Leuchtkranz vollständig und gut mit hoher Lichtintensität sichtbar ist.

Die Rahmenteile 2a, 2b, 2c, ..., 2n, aus denen der Rahmen 2 zusammengesetzt ist, sind vorteilhafterweise nicht alle aus demselben Material gefertigt. Insbesondere können die Rahmenteile 2a und 2c mit ungerader Längsachse aus Kunststoff gefertigt, insbesondere Kunststoffspritzgussteile sein, während die Rahmenteile 2b mit gerader Längsachse aus Metall gefertigt sein können, insbesondere als Blechbiegeprofil bzw. Blechkantprofil ausgebildet sein können.

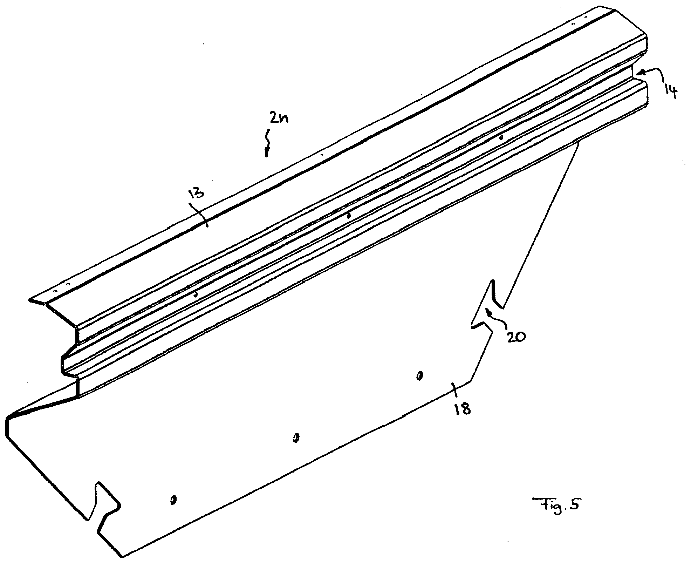

Zumindest einige der Rahmenteile 2b und 2c können vorzugsweise ebene Halteflansche 18 umfassen, die von den bauchig konturierten Profilabschnitten 13 aus radial nach innen vorstehen, so dass sie sich zu dem Rahmenträger 19 hin erstrecken. Die genannten Halteflansche 18 können plattenförmig ausgebildet sein und in einer gemeinsamen Ebene angeordnet sein, wenn die Rahmenteile miteinander verbunden sind. Die genannten plattenförmigen Halteflansche 18 sind vorteilhafterweise nicht nur mit dem Rahmenträger 19 verbunden, sondern auch untereinander bzw. miteinander verbunden, vorzugsweise durch formschlüssig wirkende Verbindungsmittel 20, beispielsweise in Form der in Fig. 3 und Fig. 5 dargestellten schlüssel- und schlüssellochartigen Formschlussabschnitte.

## Patentansprüche

1. Leuchtrahmensystem zur Einfassung einer Anzeigeeinheit wie Bildschirm (6) und dergleichen, mit einem Rahmen (2), an dem Leuchtmittel (3), vorzugsweise in Form von LEDs (4), zum Beleuchten des Rahmens (2) angeordnet sind, wobei der Rahmen (2) einen Rahmeninnenraum (30), in dem die Anzeigeeinheit anzuordnen ist, einfasst und aus mehreren Rahmenteilen (2a, 2b, ..., 2n) zusammengesetzt ist, und dem Leuchtmittel (3) Abblendmittel (31) zum Abschatten des Rahmeninnenraums (30) gegen von dem Leuchtmittel (3) abgestrahltes Licht zugeordnet sind, wobei die genannten Rahmenteile (2a, 2b ...2n) miteinander verbunden sind, wobei eine sich in mehreren Rahmenteilen /2a, 2b ...2n) erstreckende, zu einer Rahmenvorderseite hin offene Profilausnehmung (14) zur versenkten Anordnung der Leuchtmittel (3) vorgesehen ist, wobei eine die Profilausnehmung (14) begrenzende Profilflanke (28) die in der Profilausnehmung versenkten Leuchtmittel (3) zu dem Rahmeninnenraum (30) hin abblendet, **dadurch gekennzeichnet, dass** die genannten Rahmenteile (2a, 2b ...2n) an ihren Endabschnitten (7, 8) zueinander komplementäre, formschlüssig in Eingriff bringbare Verbindungsmittel (9) aufweisen.

2. Leuchtrahmensystem nach dem vorhergehenden Anspruch, wobei die Abblendmittel (31) zumindest eine am Rahmen (2) vorgesehene Abblendnase (16) aufweisen, wobei zumindest einer, vorzugsweise jeder der Rahmenteile (2a, 2b, ..., 2n) mit einer Abblendnase (16) vorzugsweise in Form einer ausbauchenden, leistenartigen Profilkontur, zum Abblenden der Leuchtmittel (3) zum Rahmeninnenraum (30) hin versehen ist.

3. Leuchtrahmensystem nach einem der vorhergehenden Ansprüche, wobei die Abblendmittel (31) zumindest eine an dem Leuchtmittel angebrachte Abblendnase (32) aufweisen, wobei die Rahmenteile (2a, 2b, ..., 2n) jeweils einen bauchigen, zu einer Rahmenvorderseite hin vorspringenden Profilabschnitt (13) umfassen, in dem die Profilausnehmung (14) zur Aufnahme der Leuchtmittel (3) ausgebildet ist.

4. Leuchtrahmensystem nach einem der vorhergehenden Ansprüche, wobei die genannte rillenförmige Profilausnehmung (14) umlaufend über den gesamten Rahmen (2) ausgebildet ist.

5. Leuchtrahmensystem nach einem der vorhergehenden Ansprüche, wobei die Leuchtmittel (3) derart angeordnet sind, dass eine Hauptachse (21) des von den Leuchtmitteln (3) jeweils abgegebenen Lichts im Wesentlichen radial von dem Rahmeninnenraum (30) weg nach aussen weist, insbesondere in der oder parallel zu der von dem Rahmen (2) definierten Rahmenebene (35) liegt.

6. Leuchtrahmensystem nach einem der vorhergehenden Ansprüche, wobei den Leuchtmitteln (3) eine Optik (36) zum Einfangen und Abstrahlen des von den Leuchtmitteln (3) abgegebenen Lichts in einer vorbestimmten Abstrahlrichtung (29), vorzugsweise im wesentlichen senkrecht zur Rahmenebene von der Rahmenvorderseite weg, zugeordnet ist.

7. Leuchtrahmensystem nach dem vorhergehenden Anspruch, wobei an dem Rahmen (2) und/oder an dem Leuchtmittel (3) zumindest ein Reflektor (15) zum Einfangen des vom Leuchtmittel (3) abgestrahlten Lichts und Abstrahlen des eingefangenen Lichts in der genannten Abstrahlrichtung (29) vorgesehen ist, wobei der Reflektor (15) derart konturiert und ausgerichtet ist, dass von dem Reflektor (15) eingefangenes Licht der Leuchtmittel (3) von der Rahmenvorderseite (33) weg in einen vor der Rahmenvorderseite liegenden Halbraum (34) abgestrahlt und/oder von der vom Rahmen (2) eingefassten Anzeigeeinheit weg abgestrahlt wird, wobei der Reflektor (15) eine sich in Rahmenumfangsrichtung erstreckende, zu der Hauptachse (14) der Lichtabstrahlung des Leuchtmittels (3) schräg angestellte Reflektorfläche umfasst, wobei die genannte Reflektorfläche von einer Flanke der Profilausnehmung (14), in der die Leuchtmittel (3) aufgenommen sind, gebildet ist, und/oder ein zur genannten Profilausnehmung (14) benachbarter Profilabschnitt zumindest eines Rahmenteils (2a, 2b, ..., 2n) als Reflektor (15) ausgebildet und/oder mit dem Reflektor (15) versehen ist.

8. Leuchtrahmensystem nach einem der vorhergehenden Ansprüche, wobei die Leuchtmittel (3) derart abgeblendet und/oder die Lichtabgabe der Leuchtmittel (3) von einer Optik derart gesteuert wird, dass das Leuchtrahmensystem im Fernbereich eine höhere Leuchtkraft und/oder höhere Wahrnehmbarkeit und/oder höhere Lichtstärke und im Nahbereich an einem vorbestimmten Bildschirmbetrachterplatz zur Betrachtung eines eingefassten Bildschirms, eine geringere Leuchtkraft und/oder geringere Wahrnehmbarkeit und/oder geringere Lichtstärke besitzt.

9. Leuchtrahmensystem nach einem der vorhergehenden Ansprüche, wobei die Verbindungsmittel (9) der Rahmenteile (2a, 2b, ..., 2n) zusammensteckbare Steckprofilabschnitte (10, 11) umfassen, welche Steckprofilabschnitte (10, 11) im Rahmenquerschnitt betrachtet aneinander angepasste Querschnittskonturen, insbesondere Knickspantkonturen, besitzen und durch Zusammenstecken in Rahmenlängs- oder -umfangsrichtung passgenau miteinander in Eingriff bringbar sind, wobei ein jeweiliger Rahmenteil (2a) im Bereich seines Steckprofilabschnitts (10) einen stufenförmigen Profilabsatz (12) umfasst, an dem ein sichtbarer Profilabschnitt des genannten Rahmenteils (2a) in den genannten Steckprofilabschnitt (10) übergeht, wobei der Steckprofilabschnitt (10) die Profilkontur des genannten sichtbaren Profilabschnitts stufenförmig versetzt fortsetzt und passgenau rückseitig hinter einen sichtbaren Profilabschnitt eines weiteren, benachbarten Rahmenteils (2b) steckbar ist, wobei die mit stufenförmigen Profilabsätzen (12) geformten Steckprofilabschnitte (10) an gebogenen und/oder aus Kunststoff gefertigten Rahmenteilen (2a, 2c) ausgebildet sind und gerade und/oder aus Metall gefertigte Rahmenteile (2b) Steckprofilabschnitte (11) ohne Profilabsätze besitzen.

10. Leuchtrahmensystem nach dem Oberbegriff des Anspruchs 1 oder einem der vorhergehenden Ansprüche, wobei die mehreren Rahmenteile (2a, 2b, ..., 2n) zumindest einen geraden Rahmenteil (2b) und zumindest einen gebogenen Rahmenteil (2a, 2c) umfassen, wobei die geraden und gebogenen Rahmenteile (2b; 2a, 2c) aus unterschiedlichen Werkstoffen gefertigt sind, wobei der oder jeder gerade Rahmenteil (2b) als Metallprofil, insbesondere Blechbiegeprofil ausgebildet ist und der oder jeder gebogene Rahmenteil (2a, 2c) als Kunststoffprofil, insbesondere Kunststoffspritzgussprofil ausgebildet ist.

11. Leuchtrahmensystem nach einem der vorhergehenden Ansprüche, wobei zumindest einige der Rahmenteile (2b) sich parallel zur Rahmenebene (17) erstreckende Halteflansche (18) zur Befestigung der Rahmenteile an einem Rahmenträger (19), der sich in dem vom Rahmen (2) eingeschlossenen Rahmeninnenraum erstreckt, aufweisen, wobei die genannten Halteflansche (18) jeweils plattenförmig ausgebildet sind und zueinander komplementäre, formschlüssig in Eingriff bringbare Verbindungsmittel (20) zum miteinander Verbinden der Halteflansche (18) von verschiedenen Rahmenteilen (2a, 2b, ..., 2n) aufweisen.

12. Leuchtrahmensystem nach einem der vorhergehenden Ansprüche, wobei der Rahmen (2) an einem Bodenständer (24) angebracht ist, durch den das Leuchtrahmensystem freistehend im Raum auf dem Boden aufstellbar ist, und Befestigungsmittel zur Befestigung zumindest eines Bildschirms (6) vorgesehen, vorzugsweise an einem sich in dem vom Rahmen (2) eingeschlossenen Rahmeninnenraum vorgesehenen Rahmenträgerteil (19) angeordnet sind.

13. Spielgerät mit zumindest einem Bedienterminal (23) für zumindest einen Spieler, sowie zumindest einem Bildschirm (6), der von einem Leuchtrahmensystem gemäß einem der vorhergehenden Ansprüche eingefasst ist.

14. Spielgerät nach dem vorhergehenden Anspruch, wobei das Spielgerät an einer Gruppe mit mehreren Spielgeräten angeordnet und das Leuchtrahmensystem den mehreren Spielgeräten gemeinsam zugeordnet ist.

## Claims

1. Illuminated frame system for framing a display unit, such as a screen (6) and the like, comprising a frame (2) on which lighting means (3), preferably in the form of LEDs (4), for illuminating the frame (2) are arranged, wherein the frame (2) frames a frame interior (30), in which the display unit is to be arranged, and is made up of a plurality of frame parts (2a, 2b, ..., 2n) and wherein shading means (31) for shading the frame interior (30) from light emitted by the lighting means (3) are associated with the lighting means (3), wherein the mentioned frame parts (2a, 2b, ..., 2n) are connected to one another, wherein a profile recess (14), which is open in the direction of a frame front side, for arranging the lighting means (3) in a recessed manner is provided, wherein a profile flank (28) which delimits the lighting means (3) recessed in the profile recess (14) screens the lighting means (3) with respect to the frame interior (30), **characterized in that** the mentioned frame parts (2a, 2b, ..., 2n) at their end sections (7, 8) comprise complementary connecting means (9) being engageable in a form-fit manner.

2. Illuminated frame system according to the preceding claim, wherein the shading means (31) comprise at least one shading edge (16) which is provided on the frame (2), wherein at least one, preferably each, of the frame parts (2a, 2b, ..., 2n) is provided with a shading edge (16), preferably in the form of a convex, strip-like profile contour, for shading the lighting means (3) with respect to the frame interior (30).

3. Illuminated frame system as claimed in one of the preceding claims, wherein the shading means (31) have at least one shading edge (32) which is fitted to the lighting means, wherein the frame parts (2a, 2b, ..., 2n) each comprise a convex profile section (13) which projects in the direction of a frame front side and in which the profile recess (14) is configured to accommodate the lighting means (3).

4. Illuminated frame system as claimed in one of the preceding claims, wherein said groove-like profile recess (14) is designed to extend circumferentially over the entire frame (2).

5. Illuminated frame system as claimed in one of the preceding claims, wherein the lighting means (3) are arranged in such a way that a main axis (21) of the light which is in each case output by the lighting means (3) points outward substantially radially away from the frame interior (30), in particular in or parallel with respect to the frame plane (35) which is defined by the frame (2).

6. Illuminated frame system as claimed in one of the preceding claims, wherein an optical system (36) for capturing and emitting the light, which is output by the lighting means (3), in a predetermined emission direction (29), preferably away from the frame front side substantially perpendicularly to the frame plane, is associated with the lighting means (3).

7. Illuminated frame system as claimed in the preceding claim, wherein at least one reflector (15) for capturing the light emitted by the lighting means (3) and for emitting the captured light in said emission direction (29) is provided on the frame (2) and/or on the lighting means (3), wherein the reflector (15) is contoured and oriented in such a way that the light from the lighting means (3) captured by the reflector (15) is emitted into a half-space (34), which is situated in front of the frame front side, away from the frame front side (33) and/or is emitted away from the display unit which is framed by the frame (2), wherein the reflector (15) comprises a reflector area which extends in the frame circumferential direction and is inclined with respect to said main axis (14) of the light emitted by the lighting means (3), wherein said reflector area is preferably formed by a flank of the profile recess (14), in which the lighting means (3) are accommodated, and/or a profile section, which is adjacent to said profile recess (14), of at least one frame part (2a, 2b, ..., 2n) is in the form of a reflector (15) and/or is provided with the reflector (15).

8. Illuminated frame system as claimed in one of the preceding claims, wherein the lighting means (3) is shaded in such a way and/or the light output by the lighting means (3) is controlled by an optical system in such a way that the illuminated frame system has a higher illumination force and/or higher perceptibility and/or higher light intensity in the far range, and a lower illumination force and/or relatively low perceptibility and/or lower light intensity in the near range in a predetermined screen viewing position for viewing a framed screen.

9. Illuminated frame system as claimed in one of the preceding claims, wherein the connecting means (9) of the frame parts (2a, 2b, ..., 2n) comprise plug-type profile sections (10, 11) being pluggable together and which plug-type profile sections (10, 11) have cross-sectional contours, in particular hard-chine contours, which are matched to one another as viewed in the cross section of the frame and are engageable with one another with an accurate fit by being plugged together in the frame longitudinal direction or frame circumferential direction, wherein a respective frame part (2a) comprises a step-like profile projection (12) in the region of its plug-type profile section (10), a visible profile section of said frame part (2a) merging into said plug-type profile section (10) at said step-like profile projection, wherein the plug-type profile section (10) continues the profile contour of said visible profile section in a manner offset in the form of a step and being plug-connectable with an accurate fit at the rear behind a visible profile section of a further, adjacent frame part (2b), wherein the plug-type profile sections (10) which are formed with step-like profile projections (12) are formed on frame parts (2a, 2c) that are bent and/or produced from plastic, and the frame parts (2b) which are straight and/or produced from metal have plug-type profile sections (11) without profile projections.

10. Illuminated frame system as claimed in the preamble of claim 1 or in one of the preceding claims, wherein the plurality of frame parts (2a, 2b, ..., 2n) comprise at least one straight frame part (2b) and at least one bent frame part (2a, 2c), wherein the straight and bent frame parts (2b; 2a, 2c) are produced from different materials, wherein the or each straight frame part (2b) is in the form of a metal profile, in particular a bent sheet-metal profile, and the or each bent frame part (2a, 2c) is in the form of a plastic profile, in particular a plastic injection-molded profile.

11. Illuminated frame system as claimed in one of the preceding claims, wherein at least some of the frame parts (2b) have holding flanges (18), which extend parallel to the frame plane (17), for fastening the frame parts to a frame support (19) which extends in the frame interior which is enclosed by the frame (2), wherein the said holding flanges (18) are each of plate-like design and have complementary connecting means (20) engageable in a form-fit manner, for connecting the holding flanges (18) of different frame parts (2a, 2b, ..., 2n) to one another.

12. Illuminated frame system as claimed in one of the preceding claims, wherein the frame (2) is fitted to a floor stand (24) by which the illuminated frame system is arrangeable on the floor in a freestanding manner in space, and fastening means for fastening at least one screen (6) are provided, preferably are arranged on a frame support part (19) which is provided in the frame interior enclosed by the frame (2).

13. Gaming device comprising at least one operator control terminal (23) for at least one player, and also at least one screen (6) which is framed by an illuminated frame system as claimed in one of the preceding claims.

14. Gaming device as claimed in the preceding claim, wherein the gaming device is arranged on a group comprising a plurality of gaming devices, and the illuminated frame system is jointly associated with the plurality of gaming devices.

## Revendications

1. Système de cadre lumineux destiné à l'enchâssement d'une unité d'affichage telle qu'un écran (6) et similaire, comprenant un cadre (2), sur lequel sont disposés des moyens d'éclairage (3) de préférence sous la forme de LED (4) pour l'éclairage du cadre (2), le cadre (2) enchâssant un espace intérieur de cadre (30) dans lequel l'unité d'affichage est à disposer, et étant constitué de plusieurs parties de cadre (2a, 2b,..., 2n), et des moyens d'occultation (31) étant associés au moyen d'éclairage (3) pour obscurcir l'espace intérieur de cadre (30) contre de la lumière émise par le moyen d'éclairage (3), lesdites parties de cadre (2a, 2b, ..., 2n) étant reliées entre elles, un évidement de profilé (14) ouvert vers une face avant de cadre et s'étendant dans plusieurs parties de cadre (2a, 2b, ..., 2n) étant prévu pour la disposition enfoncée des moyens d'éclairage (3), une pente de profilé (28), qui délimite l'évidement de profilé (14), occultant les moyens d'éclairage (3) enfoncés dans l'évidement de profilé en direction de l'espace intérieur de cadre (30), **caractérisé en ce que** lesdites parties de cadre (2a, 2b, ..., 2n) comportent sur leurs parties d'extrémité (7, 8) des moyens de liaison (9) complémentaires entre eux et pouvant être amenés en prise par complémentarité de forme.

2. Système de cadre lumineux selon la revendication précédente, dans lequel les moyens d'occultation (31) comportent au moins un nez d'occultation (16) prévu sur le cadre (2), au moins une, de préférence chacune, des parties de cadre (2a, 2b, ..., 2n) étant pourvue d'un nez d'occultation (16) de préférence sous la forme d'un contour de profilé de type bandeau se bombant pour occulter les moyens d'éclairage (3) en direction de l'espace intérieur de cadre (30).

3. Système de cadre lumineux selon l'une des revendications précédentes, dans lequel les moyens d'occultation (31) comportent au moins un nez d'occultation (32) monté sur le moyen d'éclairage, les parties de cadre (2a, 2b, ..., 2n) comprenant respectivement un segment de profilé (13) bombé faisant saillie vers un côté avant de cadre, dans lequel l'évidement de profilé (14) est réalisé pour recevoir le moyen d'éclairage (3).

4. Système de cadre lumineux selon l'une des revendications précédentes, dans lequel ledit évidement de profilé (14) en forme de rainure est réalisé de manière périphérique sur tout le cadre (2).

5. Système de cadre lumineux selon l'une des revendications précédentes, dans lequel les moyens d'éclairage (3) sont disposés de telle manière qu'un axe principal (21) de la lumière respectivement émise par les moyens d'éclairage (3) est orienté sensiblement radialement de l'espace intérieur de cadre (30) vers l'extérieur, et se trouve en particulier dans le plan de cadre (35) défini par le cadre (2) ou parallèle à celui-ci.

6. Système de cadre lumineux selon l'une des revendications précédentes, dans lequel un dispositif optique (36), destiné à capter et émettre la lumière émise par les moyens d'éclairage (3) dans une direction d'émission (29) prédéfinie de préférence sensiblement perpendiculaire au plan de cadre loin de la face avant du cadre, est associé aux moyens d'éclairage (3).

7. Système de cadre lumineux selon la revendication précédente, dans lequel au moins un réflecteur (15) est prévu sur le cadre (2) et/ou sur le moyen d'éclairage (3) pour capter la lumière émise par le moyen d'éclairage (3) et émettre la lumière captée dans ladite direction d'émission (29), le réflecteur (15) présentant un contour tel et étant orienté de telle manière que la lumière des moyens d'éclairage (3) captée par le réflecteur (15) est émise loin de la face avant du cadre (33) dans un demi-espace (34) se trouvant devant la face avant du cadre et/ou est émise depuis l'unité d'affichage enchâssée par le cadre (2), le réflecteur (15) comprenant une surface de réflecteur s'étendant dans la direction périphérique du cadre, orientée obliquement par rapport à l'axe principal (14) de l'émission de lumière du moyen d'éclairage (3), ladite surface de réflecteur étant formée par une pente de l'évidement de profilé (14), dans laquelle sont reçus les moyens d'éclairage (3), et/ou un segment de profilé voisin dudit évidement de profilé (14) d'au moins une partie de cadre (2a, 2b, ..., 2n) se présentant sous la forme d'un réflecteur (15) et/ou étant pourvu du réflecteur (15).

8. Système de cadre lumineux selon l'une des revendications précédentes, dans lequel les moyens d'éclairage (3) sont occultés et/ou l'émission de lumière des moyens d'éclairage (3) est contrôlée par un dispositif optique de telle manière que le système de cadre lumineux possède de loin un pouvoir d'éclairage supérieur et/ou une visibilité supérieure et/ou une intensité lumineuse supérieure et de près, à un poste d'observation de l'écran prédéfini pour l'observation d'un écran enchâssé, un pouvoir d'éclairage inférieur et/ou une visibilité inférieure et/ou une intensité lumineuse inférieure.

9. Système de cadre lumineux selon l'une des revendications précédentes, dans lequel les moyens de liaison (9) des parties de cadre (2a, 2b, ..., 2n) comprennent des segments de profilé enfichables (10, 11) qui peuvent être assemblés les uns aux autres, lesdits segments de profilé enfichables (10, 11), vus dans la section transversale du cadre, possédant des contours de section transversale, en particulier des contours anguleux, adaptés les uns aux autres et pouvant être amenés en prise les uns avec les autres de manière parfaitement ajustée par assemblage dans la direction longitudinale ou périphérique du cadre, une partie de cadre (2a) respective comprenant, dans la zone de son segment de profilé enfichable (10), un talon de profilé (12) en forme de marche, sur lequel un segment de profilé visible de ladite partie de cadre (2a) se fond dans ledit segment de profilé enfichable (10), le segment de profilé enfichable (10) prolongeant le contour de profilé dudit segment de profilé visible de manière décalée en forme de marche et pouvant être emboîté de manière parfaitement ajustée à l'arrière d'un segment de profilé visible d'une autre partie de cadre (2b) voisine, les segments de profilés enfichables (10) formés avec des talons de profilés (12) en forme de marche étant réalisés sur des parties de cadre (2a, 2c) incurvées et/ou fabriquées en matière plastique et des parties de cadre (2b) rectilignes et/ou fabriquées en métal possédant des segments de profilé enfichables (11) sans talon de profilé.

10. Système de cadre lumineux selon le préambule de la revendication 1 ou l'une des revendications précédentes, dans lequel les plusieurs parties de cadre (2a, 2b, ..., 2n) comprennent au moins une partie de cadre (2b) rectiligne et au moins une partie de cadre (2a, 2c) incurvée, les parties de cadre (2b ; 2a, 2c) rectilignes et incurvées étant fabriquées dans différents matériaux, la ou chaque partie de cadre (2b) rectiligne étant réalisée sous la forme d'un profilé métallique, en particulier un profilé de tôle pliée et la ou chaque partie de cadre (2a, 2c) incurvée étant réalisée sous la forme d'un profilé en matière plastique, en particulier un profilé en matière plastique injecté.

11. Système de cadre lumineux selon l'une des revendications précédentes, dans lequel au moins quelques-unes des parties de cadre (2b) comportent des joues de maintien (18) s'étendant parallèlement au plan du cadre (17) pour la fixation des parties de cadre à un support de cadre (19), qui s'étend dans l'espace intérieur de cadre entouré par le cadre (2), lesdites joues de maintien (18) étant respectivement formées en forme de plaque, et comportant des moyens de liaison (20) complémentaires entre eux pouvant être amenés en prise par complémentarité de forme pour la liaison entre elles des joues de maintien (18) de différentes parties de cadre (2a, 2b, ..., 2n).

12. Système de cadre lumineux selon l'une des revendications précédentes, dans lequel le cadre (2) est monté sur un pied (24), au moyen duquel le système de cadre lumineux peut être posé sur le sol isolé dans l'espace, et des moyens de fixation sont prévus pour la fixation d'au moins un écran (6), de préférence disposés sur une partie de support de cadre (19) prévue dans l'espace intérieur de cadre entouré par le cadre (2).

13. Appareil de jeu comprenant au moins un terminal de commande (23) pour au moins un joueur, ainsi qu'au moins un écran (6), qui est enchâssé par un système de cadre lumineux selon l'une des revendications précédentes.

14. Appareil de jeu selon la revendication précédente, l'appareil de jeu étant disposé sur un groupe comprenant plusieurs appareils de jeu et le système de cadre lumineux étant associé conjointement aux plusieurs appareils de jeu.
